# EUROPEAN PATENT APPLICATION

(11) **EP 4 657 479 A1**
(43) Date of publication of application: **03.12.2025**
(21) Application number: 25305730.1
(22) Date of filing: 21.05.2025
(51) Int. Cl.: H01H 9/22, H01H 3/10, H01H 9/28, H01H 71/56

(54) **ROTATION SHAFT STRUCTURE, TRANSMISSION SYSTEM, OPERATION MECHANISM AND SWITCHING DEVICE ASSEMBLY**

(30) Priority: 27.05.2024 CN 202421164248 U
(71) Applicant: SCHNEIDER ELECTRIC INDUSTRIES SAS, 92500 Rueil-Malmaison (FR)
(72) Inventor: LI, Xiaoqiang, Shanghai, 201203 (CN)
(74) Representative: Manitz Finsterwald Patent- und Rechtsanwaltspartnerschaft mbB

(57) **Abstract**

The present application relates to a rotation shaft structure, a transmission system, an operation mechanism, and a switching device assembly. The rotation shaft structure includes a rotation shaft, rotatably installed on a housing and being capable of rotating between a first rotation position and a second rotation position, and further configured to be capable of translating between a first translation position and a second translation position in a direction along a rotation axis of the rotation shaft; a blocking assembly, pivotally coupled to the rotation shaft and being capable of switching between a first posture and a second posture with respect to the housing; and a cooperative blocking member, fixed on the housing, when the blocking assembly is in the first posture, the cooperative blocking member is out of a translation path of the rotation shaft from the first translation position to the second translation position, thereby allowing the rotation shaft to translate to the second translation position, when the blocking assembly is in the second posture, the cooperative blocking member is in the translation path of the rotation shaft from the first translation position to the second translation position, thereby blocking the rotation shaft from translating to the second translation position.

## Description

The present disclosure claims the priority and benefits of the Chinese Patent Applications No. 2024211642487, which was filed on May 27, 2024, the disclosure of which is incorporated herein by reference in its entirety as part of the present disclosure.

### TECHNICAL FIELD

The present disclosure relates to a rotation shaft structure, a transmission system, an operation mechanism and a switching device assembly.

### BACKGROUND

In some rotation shaft structures, in some cases, it is needed to realize the axial free movement of the rotation shaft. However, in some cases, it is needed to limit the axial free movement of the rotation shaft to avoid accidental axial movement of the rotation shaft.

### SUMMARY

In order to overcome the abovementioned problems, the present application provides a rotation shaft structure, which includes: a rotation shaft, rotatably installed on a housing and being capable of rotating between a first rotation position and a second rotation position, and further configured to be capable of translating between a first translation position and a second translation position in a direction along a rotation axis of the rotation shaft; a blocking assembly, pivotally coupled to the rotation shaft and being capable of switching between a first posture and a second posture with respect to the housing; and a cooperative blocking member, fixed on the housing, when the blocking assembly is in the first posture, the cooperative blocking member is out of a translation path of the rotation shaft from the first translation position to the second translation position, thereby allowing the rotation shaft to translate to the second translation position, when the blocking assembly is in the second posture, the cooperative blocking member is in the translation path of the rotation shaft from the first translation position to the second translation position, thereby blocking the rotation shaft from translating to the second translation position.

Advantageously, the blocking assembly includes an outer shell, a protrusion protruding inward from an inner wall of the outer shell, and an elastic member, wherein the outer shell is sleeved on the rotation shaft, and the elastic member is arranged between an insertion part of the rotation shaft inserted into the outer shell and one side of the protrusion.

Advantageously, at the second rotation position of the rotation shaft, the blocking assembly is in the first posture, and the elastic member is compressed between the insertion part of the rotation shaft and the protrusion in a first compressed state.

Advantageously, after the rotation shaft is translated from the first translation position to the second translation position, the rotation shaft rotates in a predetermined direction by a predetermined angle during a rotation of the rotation shaft from the second rotation position towards the first rotation position in the predetermined direction, so that the outer shell of the blocking assembly abuts against the cooperative blocking member, with a further rotation of the rotation shaft, the insertion part of the rotation shaft rotates relative to the protrusion, so that the elastic member is further compressed, after the rotation shaft rotates to the first rotation position, the elastic member is in a second compressed state.

Advantageously, when the rotation shaft rotates to the first rotation position, the rotation shaft can be translated back to the first translation position from the second translation position, so that the blocking assembly is out of abutment with the cooperative blocking member, so that the elastic member is released from the second compressed state to the first compressed state, so that the blocking assembly is in the second posture.

Advantageously, the cooperative blocking member is in a form of a wall.

Advantageously, the wall includes a first wall and a second wall, the first wall and the second wall are spaced apart from each other in a direction perpendicular to the rotation axis of the rotation shaft, so that when the rotation shaft is translated from the first translation position to the second translation position, a gap between the first wall and the second wall accommodates the blocking assembly in the first posture.

The present application further provides a transmission system, which includes the abovementioned rotation shaft structure, the rotation shaft of the rotation shaft structure is a driving member; a driven member, movably arranged on the housing, wherein the driving member is operatively coupled to the driven member, so that when the driving member is able to drive the driven member to move upon the driving member moving.

The present application further provides an operation mechanism for a switching device, wherein the operation mechanism is installed to the switching device, the operation mechanism includes: the abovementioned transmission system; an operating handle, rotatably installed on the housing, being capable of rotating between a closed position and an open position, and indicating the closed position and the open position, wherein the driving member is fixedly connected to the operating handle and is able to rotate together with the operating handle; the driven member is operatively connected to the driving member on the one hand and operatively connected to the switching device on the other hand, the first rotation position of the driving member corresponds to a closed state of the switching device, and the second rotation position of the driving member corresponds to an open state of the switching device.

The present application further provides a switching device assembly, the switching device assembly includes a switching device and the abovementioned operation mechanism, and the operation mechanism is installed to the switching device.

### BRIEF DESCRIPTION OF DRAWINGS

The above and other features and advantages of exemplary embodiments of the present disclosure will become more apparent from the following detailed description taken in conjunction with the accompanying drawings, which are for illustrative purposes only and are not intended to limit the scope of the present disclosure in any way, among them:
Fig. 1 shows a schematic top view of a rotation shaft structure according to the present application, in this case, the rotation shaft is in a second rotation position and a first translation position, and the blocking assembly is in a first posture.
Fig. 2 shows a sectional front view of the rotation shaft structure in Fig. 1.
Fig. 3 shows a schematic top view of the rotation shaft structure according to the application, in this case, the rotation shaft is in a second rotation position and a second translation position, and the blocking assembly is in a first posture.
Fig. 4 shows a sectional front view of the rotation shaft structure in Fig. 2.
Fig. 5 shows a schematic top view of the rotation shaft structure according to the present application. At this time, the rotation shaft is in a second translation position and a first rotation position, and the blocking assembly is in an intermediate posture between the first posture and the second posture.
Fig. 6 shows a sectional front view of the rotation shaft structure in Fig. 5.
Fig. 7 shows a schematic top view of the rotation shaft structure according to the present application, in this case, the rotation shaft is in a first translation position and a first rotation position, and the blocking assembly is in a second posture.
Fig. 8 shows a sectional front view of the rotation shaft structure in Fig. 7.
Fig. 9 shows a perspective view of a switching device including a rotation shaft structure.

### DETAILED DESCRIPTION

In order to make the purpose, technical details and advantages of the technical solution of the present disclosure more clear, the technical solution of the embodiment of the present disclosure will be described clearly and completely with the accompanying drawings of specific embodiments of the present disclosure. Like reference numerals in the drawings represent like parts. It should be noted that the described embodiment is a part of the embodiment of the present disclosure, not the whole embodiment. Based on the described embodiments of the present disclosure, all other embodiments obtained by ordinary skilled in the field without creative labor belong to the scope of protection of the present disclosure.

Compared with the embodiments shown in the accompanying drawings, the feasible embodiments within the protection scope of the present disclosure may have fewer components, other components not shown in the accompanying drawings, different components, components arranged differently or components connected differently, etc. Furthermore, two or more components in the drawings may be implemented in a single component, or a single component shown in the drawings may be implemented as a plurality of separate components.

Unless otherwise defined, technical terms or scientific terms used herein shall have their ordinary meanings as understood by people with ordinary skills in the field to which the present disclosure belongs. The terms "first", "second" and similar terms used in the specification and claims of the patent application of the present disclosure do not indicate any order, quantity or importance, but are only used to distinguish different components. When the number of parts is not specified, the number of parts can be one or more; Similarly, similar words such as "a", "an", "the" and "said" do not necessarily mean quantity limitation. Similar words such as "including" or "containing" mean that the elements or objects appearing before the word cover the elements or objects listed after the word and their equivalents, without excluding other elements or objects. "Up", "Down", "Left" and "Right" are only used to indicate the relative orientation relationship when the equipment is used or the orientation relationship shown in the accompanying drawings. When the absolute position of the described object changes, the relative orientation relationship may also change accordingly.

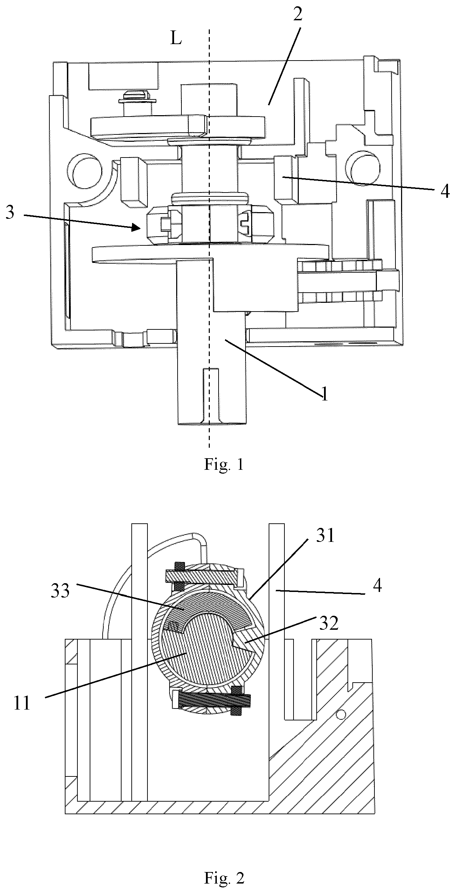

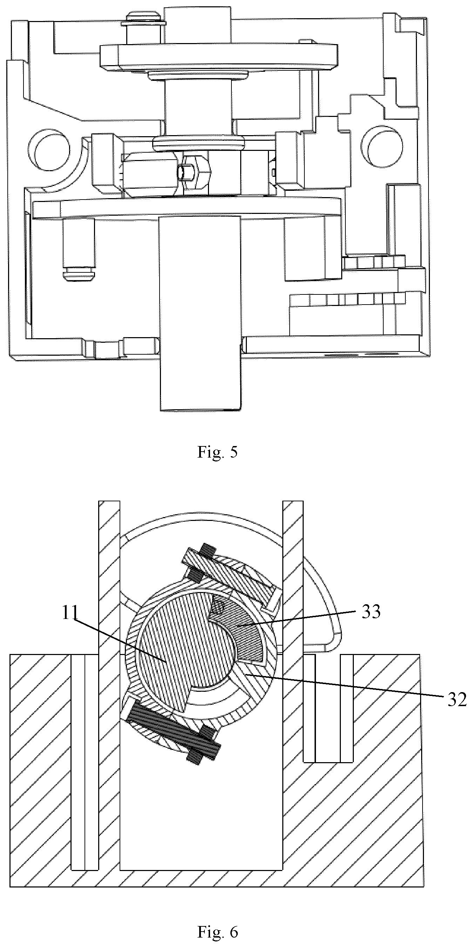

Hereinafter, a transmission system including a rotation shaft structure according to the present application will be described with reference to Figs. 1 to 8. The rotation shaft structure includes a rotation shaft 1 rotatably installed on a housing 2 and being capable of rotating between a first rotation position (as shown in Figs. 5 and 6) and a second rotation position (as shown in Figs. 1 and 2). Further, the rotation shaft 1 is also configured to be able to translate between a first translation position and a second translation position in a direction along a rotation axis L of the rotation shaft. That is to say, the rotation shaft can translate in addition to rotation.

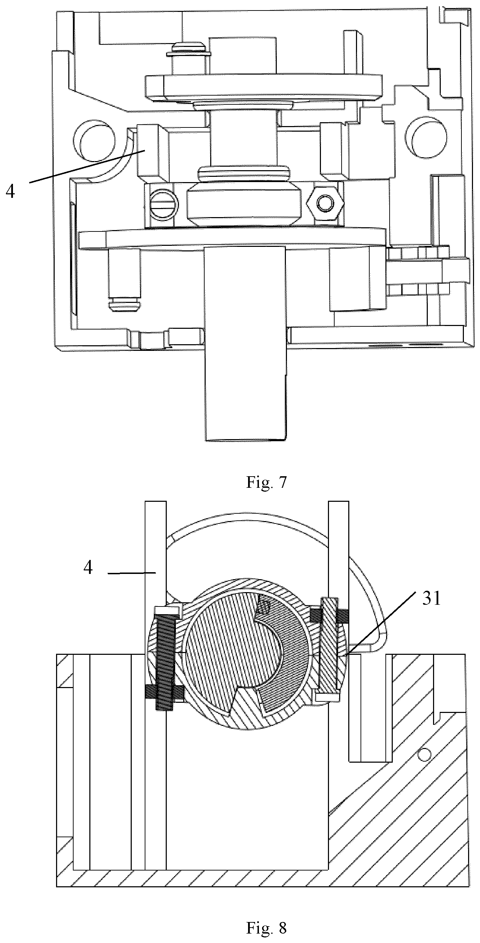

A blocking assembly 3 is pivotally coupled to the rotation shaft 1, and is capable of being switched between a first posture (as shown in Figs. 1 and 2) and a second posture (as shown in Figs. 7 and 8) with respect to the housing, and can also be in an intermediate posture between the first posture and the second posture, as shown in Figs. 5 and 6. A cooperative blocking member 4 is fixed on the housing, and can be a separate component from the housing or can be formed integrally with the housing. When the blocking assembly 3 is in the first posture, the cooperative blocking member is out of a translation path of the rotation shaft from the first translation position to the second translation position, thereby allowing the rotation shaft to translate to the second translation position. When the blocking assembly is in the second posture, the cooperative blocking member is in the translation path of the rotation shaft from the first translation position to the second position, thereby blocking the rotation shaft from translating to the second translation position.

The blocking assembly 3 includes an outer shell 31, a protrusion 32 protruding inward from an inner wall of the outer shell, and an elastic member 33, the outer shell is sleeved on the rotation shaft 1, and the elastic member 33 is arranged between an insertion part 11 of the rotation shaft 1 inserted into the outer shell and one side of the protrusion 32.

As shown in Figs. 1 and 2, the rotation shaft 1 is in the second rotation position and the first translation position, the blocking assembly is in the first posture, and the elastic member 33 is compressed between the insertion part 11 of the rotation shaft and the protrusion 32 in a first compressed state. As shown particularly in Fig. 1, the cooperative blocking member 4 is out of the translation path of the rotation shaft from the first translation position to the second translation position, thereby allowing the rotation shaft 1 to translate from the first translation position to the second translation position.

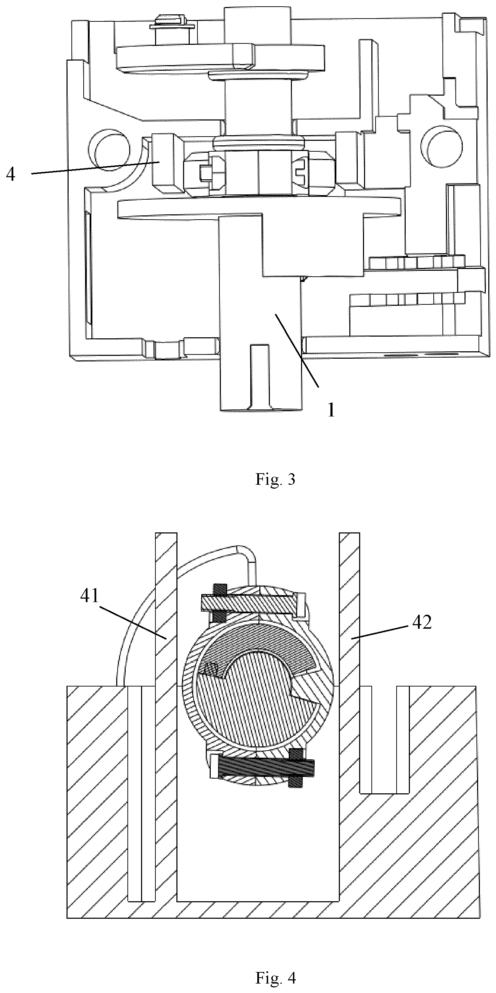

As shown in Figs. 3 and 4, the rotation shaft 1 has been translated from the first translation position to the second translation position, but the rotation shaft 1 is still in the second rotation position, and the blocking assembly is still in the first posture. The cooperative blocking member 4 is in the form of a wall, which includes a first wall 41 and a second wall 42, the first wall 41 and the second wall 42 are spaced apart from each other in a direction perpendicular to a rotation axis of the rotation shaft, so that when the rotation shaft is translated from the first translation position to the second translation position, a gap between the first wall and the second wall accommodates the blocking assembly in the first posture.

When the rotation shaft 1 is rotated from the second rotation position to the first rotation position in a predetermined direction after the rotation shaft 1 is translated to the second translation position, the rotation shaft rotates by a predetermined angle, so that the outer shell of the blocking assembly abuts against the cooperative blocking member 4. With the further rotation of the rotation shaft, an insertion part of the rotation shaft rotates relative to the protrusion, so that the elastic member is further compressed, after the rotation shaft rotates to the first rotation position, the elastic member is in a second compressed state, as shown in Figs. 5 and 6.

When the rotation shaft rotates to the first rotation position, the rotation shaft is able to be translated back to the first translation position from the second translation position, so that the outer shell of the blocking assembly 3 is out of abutment with the cooperative blocking member 4, and thus the elastic member 33 is released from the second compressed state to the first compressed state, so that the blocking assembly is in the second posture, as shown in Figs. 7 and 8. Furthermore, the cooperative blocking member 4 is in the translation path of the blocking assembly 3 from the first translation position to the second translation position, as can be seen particularly in Fig. 7.

The transmission system of the present application includes the abovementioned rotation shaft structure and a driven member, the second rotating member is rotatably arranged on the housing 2, and the driving member (i.e., the rotation shaft 1) is operatively coupled to the driven member (not shown) so as to drive the driven member to move when the driving member moves.

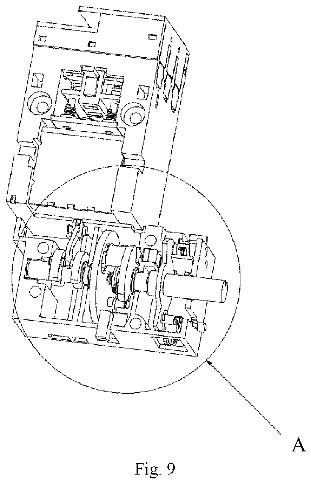

The application also provides an operation mechanism for a switching device, as shown in detail A of Fig. 9. The operation mechanism includes the transmission system as described above; an operating handle, rotatably installed on the housing, being capable of rotating between a closed position and an open position, and indicating a closed position and an open position, and the driving member is fixedly connected to the operating handle and is able to rotate together with the operating handle; on the one hand, the driven member is operatively connected to the driving member, and on the other hand, the driven member is operatively connected to the switching device. The first rotational position of the driving member corresponds to the closed state of the switching device, and the second rotational position of the driving member corresponds to the open state of the switching device.

The application also provides a switching device assembly, which includes the operation mechanism and the switching device. The switching device can be any form of a switch. A second rotation member of the operation mechanism is connected to the switching device by any suitable transmission mechanism, so that the switching device can perform opening and closing operations. For such a transmission mechanism, those skilled in the art can design it according to their needs, and it is not the focus of the present disclosure, so it will not be described here.

Through the rotation shaft structure of the application, it can be simply realized that the rotation shaft can only be translated to the second translation position at the second rotation position, but cannot be translated to the second translation position at the first rotation position. When it is applied to a switching device assembly, it can better realize the operation of the operation mechanism of switching device assembly and prevent misoperation.

Although the present disclosure has been described in the specification and illustrated in the drawings on the basis of referring to various embodiments, those skilled in the art can understand that the abovementioned embodiments are only preferred embodiments, and some technical features in the embodiments may not be necessary for solving specific technical problems, so these technical features may not be needed or omitted without affecting the solution of technical problems or the formation of technical solutions. Moreover, the features, elements and/or functions of one embodiment can be combined, cooperated or coordinated with those of one or more other embodiments as appropriate, unless the combination, cooperation or coordination is obviously impracticable.

## Claims

1. A rotation shaft structure, which is **characterized in that**, the rotation shaft structure comprises:
a rotation shaft (1), rotatably installed on a housing (2) and being capable of rotating between a first rotation position and a second rotation position, and further configured to be capable of translating between a first translation position and a second translation position in a direction along a rotation axis of the rotation shaft;
a blocking assembly (3), pivotally coupled to the rotation shaft (1) and being capable of switching between a first posture and a second posture with respect to the housing; and
a cooperative blocking member (4), fixed on the housing (2),
wherein when the blocking assembly (3) is in the first posture, the cooperative blocking member (4) is out of a translation path of the rotation shaft (1) from the first translation position to the second translation position, thereby allowing the rotation shaft (1) to translate to the second translation position,
when the blocking assembly (3) is in the second posture, the cooperative blocking member (4) is in the translation path of the rotation shaft (1) from the first translation position to the second translation position, thereby blocking the rotation shaft (1) from translating to the second translation position.

2. The rotation shaft structure according to claim 1, which is **characterized in that** the blocking assembly (3) comprises an outer shell (31), a protrusion (32) protruding inward from an inner wall of the outer shell, and an elastic member (33), wherein the outer shell (31) is sleeved on the rotation shaft, and the elastic member (33) is arranged between an insertion part (11) of the rotation shaft (1) inserted into the outer shell (31) and one side of the protrusion.

3. The rotation shaft structure according to claim 2, which is **characterized in that**, at the second rotation position of the rotation shaft (1), the blocking assembly (3) is in the first posture, and the elastic member (33) is compressed between the insertion part (11) of the rotation shaft (1) and the protrusion (32) in a first compressed state.

4. The rotation shaft structure according to claim 3, which is **characterized in that**, after the rotation shaft (1) is translated from the first translation position to the second translation position, the rotation shaft (1) rotates in a predetermined direction by a predetermined angle during a rotation of the rotation shaft from the second rotation position towards the first rotation position in the predetermined direction, so that the outer shell (31) of the blocking assembly (3) abuts against the cooperative blocking member (4), with a further rotation of the rotation shaft (1), the insertion part of the rotation shaft (1) rotates relative to the protrusion (33), so that the elastic member (33) is further compressed, after the rotation shaft (1) rotates to the first rotation position, the elastic member (33) is in a second compressed state.

5. The rotation shaft structure according to claim 4, which is **characterized in that** when the rotation shaft (1) rotates to the first rotation position, the rotation shaft (1) can be translated back to the first translation position from the second translation position, so that the blocking assembly (3) is out of abutment with the cooperative blocking member (4), so that the elastic member (33) is released from the second compressed state to the first compressed state, so that the blocking assembly (3) is in the second posture.

6. The rotation shaft structure according to any one of claims 1 to 5, which is **characterized in that** the cooperative blocking member (4) is in a form of a wall.

7. The rotation shaft structure according to claim 6, which is **characterized in that** the wall comprises a first wall (41) and a second wall (42), the first wall (41) and the second wall (42) are spaced apart from each other in a direction perpendicular to the rotation axis of the rotation shaft, so that when the rotation shaft (1) is translated from the first translation position to the second translation position, a gap between the first wall (41) and the second wall (42) accommodates the blocking assembly (3) in the first posture.

8. A transmission system, which is **characterized in that**, comprising:
the rotation shaft structure according to any one of claims 1 to 7, wherein the rotation shaft of the rotation shaft structure is a driving member;
a driven member, movably arranged on the housing, wherein the driving member is operatively coupled to the driven member, so that when the driving member is able to drive the driven member to move upon the driving member moving.

9. An operation mechanism for a switching device, wherein the operation mechanism is installed to the switching device, which is **characterized in that** the operation mechanism comprises:
the transmission system according to claim 8;
an operating handle, rotatably installed on the housing, being capable of rotating between a closed position and an open position, and indicating the closed position and the open position, wherein the driving member is fixedly connected to the operating handle and is able to rotate together with the operating handle;
the driven member is operatively connected to the driving member on the one hand and operatively connected to the switching device on the other hand,
the first rotation position of the driving member corresponds to a closed state of the switching device, and the second rotation position of the driving member corresponds to an open state of the switching device.

10. A switching device assembly, which is **characterized in that** the switching device assembly comprises a switching device and the operation mechanism according to claim 9, and the operation mechanism is installed to the switching device.
